# EUROPEAN PATENT APPLICATION

(11) **EP 1 523 088 A2**
(43) Date of publication of application: **13.04.2005**
(21) Application number: 04104877.8
(22) Date of filing: 05.10.2004
(51) Int. Cl.: H02M 7/48, H02J 3/38, H02P 9/42

(54) **Method in connection with network converter, and network converter**

(30) Priority: 08.10.2003 FI 20031472
(71) Applicant: ABB Oy, 00380 Helsinki (FI)
(72) Inventor: Pasuri, Osmo, 03250, Ojakkala (FI); Komsi, Reijo, 00640, Helsinki (FI); Hyvärinen, Veikko, 00390, Helsinki (FI)
(74) Representative: Valkeiskangas, Tapio Lassi Paavali

(57) **Abstract**

A method in connection with a network converter, and a network converter, the network converter comprising two or more network converter modules coupled in parallel, and first control means for controlling the network converter modules. The method comprises the steps of controlling the network converter modules by the first control means, preventing or allowing use of one or more network converter modules in order to reconfigure the network converter during operation of the network converter.

## Description

### BACKGROUND OF THE INVENTION

The invention relates to a method in connection with a network converter and to a network converter in accordance with the preambles of the independent claims.

A frequency converter is a device for producing, from an alternating voltage of an input, an alternating voltage in an output such that the voltage has adjustable frequency and amplitude. One common type of a frequency converter is a frequency converter with a voltage intermediate circuit, wherein the alternating voltage of the input is rectified by a network converter into a direct voltage of a direct voltage intermediate circuit. At its simplest, a network converter is formed by an uncontrolled diode bridge. A network converter may, however, be implemented by controllable components, in which case it is generally called a network inverter.

To the direct voltage intermediate circuit, a capacitor is coupled to equalize the voltage and to store energy. From the direct voltage of the direct voltage intermediate circuit, an alternating voltage is further produced by an inverter part. The inverter part supplies a direct voltage to a load in the output. By modulating the switches of the inverter part, a desired voltage with desired frequency and amplitude can be produced in the output load.

A high-power network converter is often provided by coupling several separate network converter parts fixedly and in parallel into the same direct current intermediate circuit. Each unit coupled in parallel contributes to increasing the power handling capacity of the network converter, which thus enables a structure capable of handling high powers to be achieved.

The dimensions of the parts used in a frequency converter is implemented to correspond with the highest possible power. Often, however, such maximum power is used on a quite temporary basis, in which case all components of the frequency converter, such as the network converter, network filters of the network converter, capacitors of the direct voltage intermediate circuit and the inverter, are clearly overdimensioned for the most of their operating time. It is thus difficult to optimize drives for a certain operating point.

In several applications, such as in torque-controlled turbines, however, a need exists to optimize the efficiency and network influence of a drive within a large operation range. In speed-controlled wind turbines, a frequency converter is used for producing, from the variable frequency voltage generated by a generator rotated by a wind turbine, a constant-frequency voltage to be supplied to the network. In accordance with the force of changing wind, the magnitude of electric power to be generated by a generator varies within a large range. In connection with previous known solutions, wherein a frequency converter and its peripheral devices have been dimensioned in accordance with the maximum power, it has been almost impossible to produce high-quality electric power to the network when wind velocity has been below a certain minimum limit. Harmonic wave currents generated by a network inverter have been equal in magnitude in connection with a rated load and a partial load.

As to wind turbine drives, the reliability of the devices is extremely important since the devices reside in a mast at a height of dozens of meters and often in a highly unreachable environment, such as at sea. In connection with failures, service is difficult to provide due to the circumstances. Using a frequency converter in connection with a wind turbine contributes to decreasing the risk of failures when the power of the turbine is high, i.e. typically more than 1 MW. A problem of the known solutions is thus that the operation is interrupted in connection with failure.

Typically, all devices which comprise power components and are to be coupled to a network include a network filter to equalize the current to be supplied thereto or therefrom, i.e. to keep the network influence of the device at an acceptable level. The network filter of a network converter is also dimensioned according to the rated power. When operating at power levels lower than the rated ones, a current filter is incapable of operating in an optimal manner since the proportion of harmonic current components to the total current increases strongly as power decreases from the rated power. Current distortion can be reduced considerably by a partial load if the filter is dimensioned according to a partial load power.

### BRIEF DESCRIPTION OF THE INVENTION

An object of the present invention is to provide a method and a device which avoid the aforementioned drawbacks and enable a network converter to be used economically within a larger operation area and in a more reliable manner. This object is achieved by the method and device in accordance with the invention which are characterized by what has been disclosed in the characterizing parts of independent claims 1 and 9.

The idea underlying the invention is that a network converter is implemented modularly such that separate modules are coupled in parallel as necessary. When the modules include the operational parts, such as a network filter and an intermediate circuit capacitor, that influence the magnitude of interferences being transferred to a network, the network influence of the network converter can be improved considerably by employing a number of network converter modules necessary at a given time. Furthermore, the failure endurance of the network converter improves substantially since the network converter, when configured according to the invention, becomes redundant.

### BRIEF DESCRIPTION OF THE DRAWINGS

The invention is now described in connection with preferred embodiments and with reference to the accompanying drawings, in which

Figure 1 is a schematic view showing a frequency converter;

Figure 2 shows a schematic structure of one network converter module according to the invention; and

Figure 3 shows a schematic structure of one inverter module.

### DETAILED DESCRIPTION OF THE INVENTION

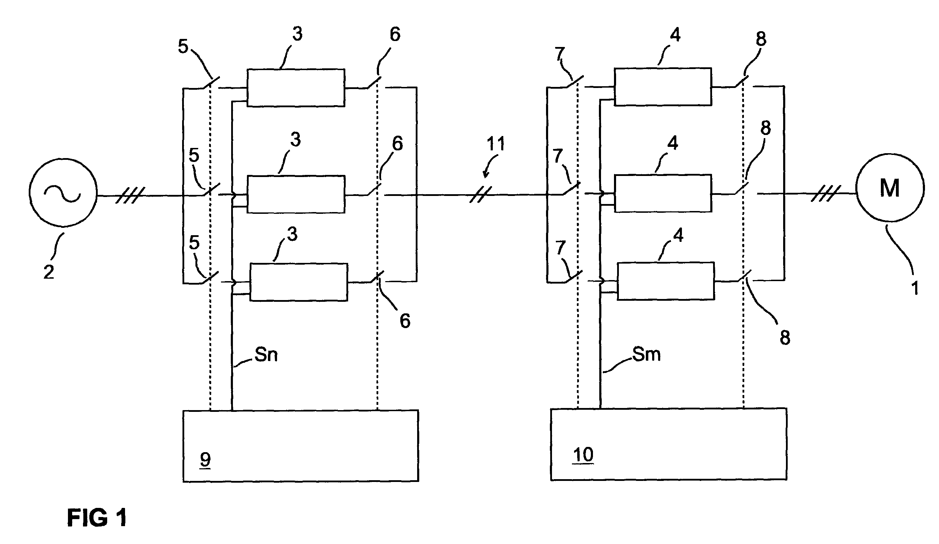

Figure 1 shows a schematic structure of a frequency converter. In this structure, both a network converter and an inverter are modular. Use of the network converter according to the invention does not, however, necessarily require modularity of the inverter. The structure of a frequency converter is disclosed in Figure 1 in connection with a motor drive, but in the specification reference is also made to a turbine drive wherein the motor 1 of Figure 1 is used as a generator. Figure 1 particularly shows a three-phase system wherein a frequency converter, according to the invention, is formed by three network converter modules 3 and three inverter modules 4 coupled in parallel. It is clear that the disclosed number of phases is not restricted to the example given in the figure; similarly, the number of parallel couplings of modules shown in the figure is not restricted thereto, either. Both may vary as necessary.

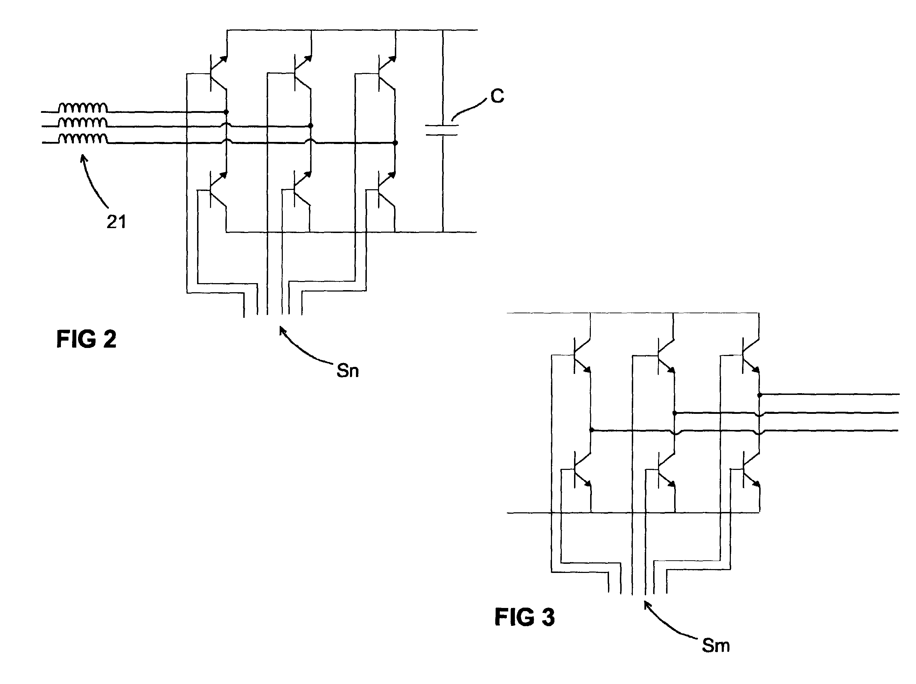

The frequency converter shown in Figure 1 includes first control means 9 for controlling network converter modules, and second control means 10 for controlling inverter modules. Both control means include the necessary logics for controlling the converter and inverter modules as well as control circuits for controlling semiconductor components. Figure 2 shows a more accurate description of the network converter module 3 according to Figure 1. As can be seen in Figure 2, a signal conductor Sn of Figure 1 comprises several control signals which control power semiconductor components of the network converter modules 3. Figure 3, which in a more accurate manner shows the inverter module 4 of Figure 1, similarly shows how a signal conductor Sm of the second control means 10 comprises several control signals of power semiconductor components. As was stated above, use of the method according to the invention does not require modularity of the inverter part. The inverter may thus be a normal inverter dimensioned for a certain power level.

According to the invention, the first control means 9 are configured to control all network control modules 3. Thus, every network converter module receives the same control if necessary. Similarly, in the embodiment of Figure 1, the second control means 10 are configured to control all inverter modules 4.

According to the method of the invention, use of one or more network converter modules is prevented or allowed, whereby the network converter is reconfigured during the operation of the network converter. Preventing or allowing use means that the use of one or more network converter modules 3 is stopped. In such a case, the current passing through the network converter is not allowed to pass through the modules whose use is prevented. Correspondingly, all current passes through the network converter modules whose use is allowed.

In a manner similar to that in connection with the network converter modules 3, according to the embodiment disclosed in Figure 1, use of one or more inverter modules 4 is prevented or allowed, whereby the inverter is reconfigured during operation. The current passing through the frequency converter thus travels via the network converter and inverter modules 3, 4 whose use is allowed. In such a case, both the network converter and the inverter of the frequency converter can be formed as optimal as possible, depending on the situation.

According to a preferred embodiment of the invention, use of the network converter modules of the network converter is prevented or allowed using first switching means 5. These switching means are e.g. three-phase switches included, according to the invention, in every network converter module. The first control means 9 are configured to control these switches as necessary. Using the switching means 5 for allowing or preventing use of the network converter modules enables reliability of operation to be achieved since the modules 3 are then physically separated from a network 2. Consequently, the control means 9 may produce instructions to all network converter modules, irrespective of which modules are in operation.

Similarly, use of the inverter modules 4 of the inverter is prevented or allowed using second switching means 8. Preferably, these switching means are three-phase switches included in every inverter module. The second control means 10 are configured to control these switching means for connecting or disconnecting the inverter modules to/from the motor 1. Disconnecting an inverter module from a motor means that no current can pass through this particular module, irrespective of control.

According to an embodiment of the invention, use of a network converter module is prevented or allowed by the control means 9. The control means thus direct the semiconductor switches of a desired module into a state wherein no current passes through the particular module. In other words, modulation of a module which is to be excluded from the parallel coupling is stopped. The semiconductor switches may then be opened, for instance. Thus, the particular network converter module does not constitute a part of the current path of the frequency converter. It is to be noted, however, that if active use of the module is stopped by stopping modulation, parallel zero diodes of the power semiconductor components may, however, conduct current. This fact is to be taken into account e.g. by eliminating zero currents by an appropriate known method.

According to a preferred embodiment of the method of the invention, a network converter is reconfigured in response to a power signal or a reactive power signal. In such a case, in connection with an electric motor drive, for instance, a control system informs the control means 9, 10 about a change in power demand. When the power or reactive power demand increases, the number of network converter and inverter modules is naturally increased if the configuration at the time of increase in power does not suffice to transfer the increasing power or reactive power. Similarly, when power decreases, the number of modules may be reduced. It is to be noted that the active number of network converter and inverter modules is changed independently of one another if a modular inverter structure disclosed in Figure 1 is used in connection with the network converter according to the invention. Such independence guarantees that both units operate as optimally as possible since in some operating situations the current of one unit is higher than that of another. For example, a magnetization current is always to be supplied to motors, which adds to the load of the inverter modules with respect to the network converter modules. Similarly, when a current compensating for reactive power is to be supplied to a network, the current of the network converter modules becomes higher than the current of the inverter part.

In addition to a power signal, the configuration may be implemented in response to a change in a torque instruction. A torque instruction is used in connection with both generator and motor drives as a control variable, which is typically obtained directly from higher control systems to be used by the control units. Other possible signals for indicating a change in power include actual values of current and velocity as well as the calculated power of a machine or a network. Furthermore, in connection with wind turbines, a higher level adjustment utilizes information on wind velocity. Wind velocity has a direct influence on the amount of power to be produced by a wind turbine drive. Consequently, wind velocity may also be used as a control signal for dimensioning the number of modules coupled in parallel.

The network converter may be configured during use also in response to failure of a certain module. The power semiconductor components used in modules often in themselves include circuits which detect component failure and which signal to an adjustment circuit about such failure. When a higher-level control system receives information about such failure, the control means responsible for controlling the particular module can be configured such that this is taken into account and the control of this particular module is stopped in all cases. Thus, the frequency converter according to the invention produces a redundant confirmation to the operation of the frequency converter.

According to the invention, every network converter module comprises a network filter 21, one being shown in the example of Figure 2 in a simplified manner and as a filter comprising inductances only. In such a case, in connection with adding or removing modules, the network influence produced by the frequency converter also changes. Network influence, i.e. a proportion of distorted current produced by a device to a network, is the smaller the closer to the dimensioned power or current of each network converter the operation takes place. In other words, if the total current of a network converter is divided between e.g. three network converter modules and the magnitude of the total current is such that two modules suffices to handle it, in terms of network influence it is considerably more advantageous to use these two network converter modules only. The proportion of the magnitude of distorted current to a total current value increases significantly when current decreases from the rated value. The method and device of the invention thus enable the network influence to be improved considerably.

According to a preferred embodiment of the invention, a network converter further comprises network-converter-module-specific second switching means 6 for separating the modules 3 from a direct voltage intermediate circuit 11 common to all network converter modules. The embodiment in Figure 1 further discloses inverter-module-specific second switching means 7 for separating the inverter modules 4 from the direct voltage intermediate circuit 11 common to all inverter modules. These second switching means are e.g. disconnectors which are used for separating a currentless module from a direct voltage intermediate circuit of a frequency converter. When a particular module has been disconnected from the network 2 or the load 1 by the switching means 5 or 8, it can be separated in its entirety from the live parts of the frequency converter by using the second switching means 6, 7. These two-phase switching means 6, 7 separating the direct voltage intermediate circuit 11 are e.g. motorized fuse separators. For its operation, such a fuse-separator derives an auxiliary voltage from an auxiliary voltage source coupled to the network. This auxiliary voltage source (not shown in the figures) also produces an auxiliary voltage to other circuits, such as control means. The auxiliary voltage source may also be a separate 230 V auxiliary voltage source meant for controlling fuse separators only. According to the embodiment, the control means 9, 10 are configured to control the switching means 6, 7. Through the control means, signalling is thus performed which controls an actuator to open these switching means. In a similar manner, the control means 9, 10 also control the switching means 5 and 8, in which the respective modules 3, 4 are coupled in parallel to the network 2 and the motor 1.

According to the invention, a network converter module further comprises a capacitor C for a direct voltage intermediate circuit. Such a capacitor is shown in Figure 2. The frequency converter may then be implemented such that the actual direct voltage intermediate circuit 11, to which the network converter modules and inverter modules are coupled, includes no independent fixed capacitors at all. Such a solution is optimal for operation since the magnitude of the capacitance of the direct voltage intermediate circuit can be optimized according to a given power level, and the main circuit then comprises no component whose failure could prevent use of the entire apparatus.

When the configurations of the inverter or the network converter are, according to the invention, changed during the operation of the frequency converter, the control means thereof should also be configured to conform with a given situation. In order to guarantee the operation of the device, the control means and the adjustment means should always know the module arrangement at any given time since adjustments are often made in the adjustment means as relative values. Relative values can be calculated when available rated current or power capacity is known. In addition, at least some higher-level control system has to know the number of modules that are in working order so as to limit the power if necessary.

In the device according to the invention, the reliability of operation can be further increased by implementing the control means such that there are several control means per network converter modules and inverter modules. In a typical case, one control card of the control means calculates the necessary instructions for controlling the power semiconductor components. These instructions are then copied to other control cards of the control means which, in turn, control their own modules. In order to increase redundancy, more than one control card of the control means may also be responsible for calculating the necessary controls. In such a case, each of the parallel modules itself determines its own control for the switch components to be controlled. This is further advantageous in terms of a reduction in disturbance currents since due to the separate controls, the parallel modules do not run synchronously, wherefore the disturbance currents produced by different modules do not equate with one another.

In the following, a simplified example will be shown of the operation of the invention, assuming that a frequency converter according to the invention is used in connection with a wind turbine. For the sake of simplicity, let us further assume that the frequency converter is formed by three network converter modules and three inverter modules. The rated power of each module is 500 kW, so that the rated power of the frequency converter is 1500 kW.

First, wind rotates a short-circuit generator connected to a wind turbine near its rated speed of rotation such that the torque of the generator can be adjusted to a value which gives a power of approximately 300 kW. The velocity of the wind is thus too low to reach the rated power of the generator. From an adjustment value of the torque, for example, information is obtained indicating that only one inverter module and only one network converter module are needed. In such a case, a higher-level control system gives the necessary information to the control means about putting one inverter module and one network converter module to use. Use of only one single module can be implemented as disclosed above, i.e. by opening the switching means of the modules or by controlling one single module only. At its simplest, modules are separated from use by detaching them on the AC side, e.g. the network converter modules from the network and the inverter modules from the load.

When the velocity and force of the wind increase, the torque of the machine can be adjusted higher, in which case the amount of electric power to be produced also increases. Furthermore, the adjustment value of the torque provides information about an increase in the electric power. The memory of a higher-level control system contains information indicating that the system includes three modules, one of which being in use. When the power exceeds the rated power of one module, i.e. 500 kW, two modules are to be coupled in parallel, in which case the current of the frequency converter is evenly divided between the modules. If two modules suffice to handle the power produced, no third module has to be put to use. When the wind gets stronger such that the torque of the machine can be further increased, and at the same time the power to be produced, a limit is reached where no two parallel modules will suffice. In the case of the example, when the torque exceeds a limit which corresponds to a power of 1000 kW, a third module should also be coupled in parallel in order to transfer power to the network. When the third module has also been put to use, the memory of a higher-level control system provides information indicating that the operation now takes place at the highest power level. In such a case, all modules of the frequency converter have been put to use, and the power can be increased all the way to the rated power of the frequency converter and, at the same time, to the rated power of the inverter.

For the sake of simplicity, it has been assumed in the above-disclosed example that both the inverter modules and the network converter modules are put to use and out of use simultaneously. In practice, the inverter and the network converter are configured independently, due to what has been disclosed above. Furthermore, no possible failures have bee taken into account in the example.

When wind and the power to be produced decrease, the operation is similar but instead of increasing the number of modules put to use, modules are put out of use. A higher-level control system knows how to control the control means to reduce the number of modules when the power to be produced is lower than the common power of the modules being used minus the power of one module.

In connection with adding and removing modules, the number of network filters and capacitors for an intermediate circuit changes according to the invention, thus enabling the network influences caused by the frequency converter to be optimized.

It is obvious to one skilled in the art that as technology advances, the basic idea of the invention can be implemented in many ways. The invention and its embodiments are thus not restricted to the above-described examples but may vary within the scope of the claims.

## Claims

1. A method in connection with a network converter, the network converter comprising
two or more network converter modules connectable in parallel with one another, and
control means for controlling the network converter modules, **characterized in that** each network converter module comprises a network filter (21) and a capacitor (C) for a direct voltage intermediate circuit, the method comprising the steps of
controlling the network converter modules by first control means,
determining a quantity relating to the network converter or its use to produce a power signal,
preventing or allowing use of one or more network converter modules in order to reconfigure the network converter during operation of the network converter in response to the power signal.

2. A method in connection with a network converter as claimed in claim 1, **cha*r*acte*r*ized in that** the network converter further comprises
network-converter-module-specific first switching means for connecting phase inputs of the network converter modules to a network, the method comprising the step wherein
preventing or allowing use of one or more network converter modules comprises the step of controlling the first network-converter-module-specific switching means in order to disconnect more network converter modules from the network or in order to connect one or more network converter modules to the network.

3. A method in connection with a network converter as claimed in claim 1 or 2, **characterized in that** preventing or allowing use of one or more network converter modules comprises the steps of
controlling, by the first control means, network converter modules whose use is allowed, and
not controlling network converter modules whose use is prevented.

4. A method as claimed in any one of claims 1 to 3, the network converter being used in connection with a wind turbine, **characterized in that** the method comprises the step of
determining wind velocity, the power signal being formed in dependence on the wind velocity.

5. A method as claimed in any one of claims 1 to 3, the network converter being used in connection with a wind turbine connected to a generator, **characterized in that** the method comprises the step of
determining torque of the generator connected to the wind turbine, the power signal being formed in dependence on the torque.

6. A method as claimed in any one of claims 1 to 3, the network converter being connected to a device controlling a motor or an electric machine, **characterized in that** the method comprises the step of forming a torque or a speed instruction for the motor, calculating a flux of the electric machine or network, the power signal being formed from the calculated flux and a calculated actual value of the torque.

7. A method as claimed in any one of claims 1 to 6, **characterized in that** the method further comprises the steps of
determining a working order of a network converter module, and
preventing control of a module out of working order.

8. A method as claimed in any one of claims 1 to 7, **characterized in that** the method comprises the step of determining a separate switch instruction for each network converter module.

9. A network converter comprising
two or more network converter modules (3),
first control means (9) for controlling the network converter modules,
a direct voltage intermediate circuit (11) common to all network converter modules, **characterized in that** the network converter further comprises
means for determining a power signal from a quantity relating to the network converter or its use,
means (5; 9) for preventing or allowing control of one or more network control modules (3) in response to the power signal such that current of the network converter does not pass through said one or more network converter modules in order to reconfigure the network converter during its operation, and that
each network converter module comprises a network filter (21) and a capacitor (C) for a direct voltage intermediate circuit.

10. A network converter as claimed in claim 9, **characterized in that** the means for preventing or allowing control of one or more network converter modules are formed by the first control means (9).

11. A network converter as claimed in claim 9, **characterized in that** the means for preventing or allowing control of one or more network converter modules comprise network-converter-module-specific switching means (5) configured to change the number of network converter modules coupled in parallel.

12. A frequency converter as claimed in any one of claims 9 to 11, **characterized in that** every network converter module further comprises second switching means (6) for separating the network converter modules (3) from a direct voltage intermediate circuit (11) common to all network converter modules.
